# EUROPÄISCHE PATENTSCHRIFT

(11) **EP 2 380 725 B1**
(45) Veröffentlichungstag und Bekanntmachung des Hinweises auf die Patenterteilung: **13.03.2013**
(21) Anmeldenummer: 11162172.8
(22) Anmeldetag: 13.04.2011
(51) Int. Cl.: B29C 61/06

(54) **Verfahren zur Rückstellung eines, ein Formgedächtnis-Kompositmaterial aufweisenden Artikels**
Method for resetting an item comprising a shape memory composite material
Procédé de retour d'un article comprenant un matériau composite à mémoire de forme

(30) Priorität: 26.04.2010 DE 102010028192
(43) Veröffentlichungstag der Anmeldung: 26.10.2011
(73) Patentinhaber: Helmholtz-Zentrum Geesthacht Zentrum für Material- und Küstenforschung GmbH, 21502 Geesthacht (DE)
(72) Erfinder: Lendlein, Dr. Andreas, 14167 Berlin (DE); Uttamchand, Narendra Kumar, 14473 Potsdam (DE); Kratz, Dr. Karl, 14615 Berlin (DE); Behl, Dr. Marc, 12207 Berlin (DE)
(74) Vertreter: Gulde Hengelhaupt Ziebig & Schneider

(56) Entgegenhaltungen:
- WO-A2-99/42528
- DE-A1- 3 826 428
- DE-A1-102007 061 342
- US-A1- 2009 283 643
- US-A1- 2010 028 686

## Beschreibung

Die Erfindung betrifft ein Verfahren zur Rückstellung eines programmierten Artikels, der wenigstens abschnittsweise ein Formgedächtnis-Kompositmaterial, umfassend ein Dreiformen-Formgedächtnispolymer und darin eingebettete magnetische Partikel, aufweist oder aus einem solchen besteht.

Im Stand der Technik sind so genannte Formgedächtnispolymere oder SMPs (shape memory polymers) bekannt, die nach einer vorherigen thermomechanischen Behandlung (ihrer so genannten "Programmierung") bei Induktion durch einen geeigneten Stimulus einen Formübergang von einer temporär fixierten Form (TF) in eine permanente Form (PF) zeigen. Am häufigsten ist dieser Formgedächtniseffekt thermisch stimuliert, das heißt, bei Erwärmung des Polymermaterials über die definierte Schalttemperatur (T_{sw}) typischerweise durch Erhöhung der Umgebungstemperatur (T_{Umg}) findet die durch Entropieelastizität angetriebene Rückstellung statt. Formgedächtnispolymere sind in der Regel Polymernetzwerke, bei denen chemische (kovalente) oder physikalische (nicht kovalente) Vernetzungsstellen die permanente Form bestimmen. Die Formgedächtnispolymere, welche einen thermisch induzierten Formgedächtniseffekt zeigen, können sowohl kovalente Polymernetzwerke (z.B. Thermosets, Photosets), nicht-kovalente thermoplastische Elastomere (z.B. Multiblock-Copolymere, wie Polyesterurethane) oder Blends (Polymer-Mischungen) und Komposite der vorgenannten Kunststoffklassen sein.

Formgedächtnispolymere sind auf molekularer Ebene aus zumindest einer Sorte Schaltsegmente zur Fixierung der temporären, programmierten Form (TF) und Netzpunkten zur Stabilisierung der ursprünglichen permanenten Form (PF) aufgebaut. Die Schaltsegmente weisen zumindest einen thermodynamischen Phasenübergang bei einer Übergangstemperatur (Tₜᵣₐₙₛ) auf, bei welcher es sich im Falle amorpher Segmente um eine Glasübergangstemperatur (Tₜᵣₐₙₛ = Tg) oder bei teilkristallinen Segmenten um eine Schmelztemperatur (Tₜᵣₐₙₛ = Tₘ) handeln kann. Die Netzpunkte können dabei sowohl physikalischer (nicht-kovalenter) Natur oder chemischer Natur (kovalente Vernetzungen) sein. Bei thermoplastischen Formgedächtnispolymeren sind die Schaltsegmente über so genannte Hartsegmente miteinander verknüpft, wobei eine Überschreitung der Übergangstemperatur der Hartsegmente zu einem physikalischen Aufschmelzen und zu einem vollständigen Formverlust des Kunststoffs führt. Die Programmierung erfolgt typischerweise, indem oberhalb der Übergangstemperatur einer von dem Schaltsegment gebildeten Phase das Polymermaterial deformiert und anschließend unter Aufrechterhaltung der Deformationskräfte unterhalb dieser Temperatur abgekühlt wird, um die temporäre Form zu fixieren. Erneute Erwärmung oberhalb der Schalttemperatur führt zu einem Phasenübergang und Wiederherstellung der ursprünglichen permanenten Form (Rückstellung). Da die Schalttemperatur T_{sw} im Gegensatz zur Übergangstemperatur Tₜᵣₐₙₛ von der mechanischen Bewegung abhängt, welche die makroskopische Formveränderung definiert, können beide Temperaturen geringfügig voneinander abweichen.

Neben diesen Zweiformenkunststoffen ("dual shape polymers"), die neben ihrer permanenten Form eine temporäre Form einnehmen können, sind so genannte Dreiformenkunststoffe ("triple shape polymers") in Form von kovalent vernetzten Polymernetzwerken (z.B. Bellin et al., Proc. Nat. Acad. Sci. USA, 2006 103 (48): 18043-18047; WO 99/42528 A; Kolesov & Radusch, Express Polym. Lett., 2008, 2, 461-473) oder thermoplastischen Formgedächtnispolymeren (Pretsch, Smart Mater. Struct., 2010 (19): 015006) beschrieben worden, die zwei aus verschiedenen Schaltsegmenten gebildeten Phasen mit unterschiedlichen Übergangs-(T_{trans,1}, T_{trans,2}) bzw. Schalttemperaturen (T_{sw,1}, T_{sw,2}) aufweisen und dadurch in der Lage sind, neben ihrer permanenten Form zwei temporäre Formen (TF1, TF2) in ihrem "Formgedächtnis" zu speichern. Dabei ist T_{sw,2} in der Regel mindestens 20 K höher als T_{sw},₁, um beide Formenübergänge unabhängig voneinander schalten zu können. Diese Dreiformenkunststoffe weisen grundsätzlich mindestens zwei nicht-mischbare, phasenseparierte (segregierte) Phasen auf, so dass jede Phase für die Fixierung jeweils einer temporären Form genutzt werden kann. In Polymernetzwerken wird die permanente Form durch kovalente Vernetzungsstellen des Polymernetzwerkes festgelegt, während die beiden temporären Formen durch einen thermomechanischen Programmierprozess definiert und durch die beiden Schaltsegmente fixiert werden. Die Fähigkeit, temperaturinduziert zwei aufeinanderfolgende Formenübergänge zu vollziehen, nämlich von einer ersten temporären Form (TF1) in eine zweite temporäre Form (TF2) und von dort in die permanente Form (PF), ermöglicht komplexe Bewegungen und eröffnet vielfältige Anwendungsmöglichkeiten, beispielsweise in der Medizin. Der thermisch induzierte Dreiformengedächtniseffekt beruht auf zwei aufeinanderfolgenden Erwärmungen des Polymermaterials über die definierten Schalttemperaturen (T_{sw,1}, T_{sw,2}) typischer weise durch Erhöhung der Umgebungstemperatur (T_{Umg,1} > T_{sw,1}; T_{Umg,2}> T_{sw,2}).

Weiterhin ist die magnetisch stimulierte Auslösung eines Dreiformenübergangs für Formgedächtnis-Kompositmaterialien bekannt, die in einem Dreiformenpolymer eingebettete magnetische Partikel umfassen (DE 10 2007 037 063 A; Narendra Kumar, Kratz, Behl, Lendlein, Active Polymers, edited by A. Lendlein, V. Prasad Shastri, K. Gall, Mater. Res. Soc. Symp. Proc., 2009, 1190, NN03, DOI:10.1557/PROC-1190-NN03-21). Bei diesen Materialien können somit zwei Formenübergänge (TF1 → TF2 → PF) magnetisch durch zwei aufeinanderfolgende Erhöhungen der Magnetfeldstärke H induziert werden. Dabei ist der Formenübergang von TF1 → TF2 durch die erste Schaltmagnetfeldstärke H_{sw,1} und der Formenübergang von TF2 → PF durch die zweite Schaltmagnetfeldstärke H_{sw,2} charakterisiert, was einer aufeinanderfolgenden Erwärmungen des Polymermaterials über die definierten Schalttemperaturen (T_{sw,1} bei H_{sw,1} und T_{sw,2} bei H_{sw,2}) entspricht. Die erzielte Erwärmung des Polymermaterials bei einer bestimmten Magnetfeldstärke ist dabei stark von dem umgebenden Medium abhängig (Weigel, Mohr, Lendlein, Smart Mater. Struc. 2009, 18,025011).

Ein weiteres Beispiel für ein Formgedächtnis-Kompositmaterial, das magnetische Partikel enthält, ist in DE 10 2007 061 342 A2 offenbart.

Nachteil der bisherigen Lösungen ist, dass ein thermisch induzierter Dreiformengedächtniseffekt von Polymeren entweder durch zwei aufeinanderfolgende Erhöhungen der Umgebungstemperatur über die Schalttemperaturen (T_{Umg,1} > T_{sw},₁; T_{Umg,2} >T_{sw},₂) oder - für magnetisch stimulierbare Formgedächtnis-Kompositmaterialien - durch zwei aufeinanderfolgende Erhöhungen der Magnetfeldstärke (T(H_{sw},₁) > T_{sw,1} und T(H_{sw,2}) > T_{sw,2}) mit einer entsprechenden Materialerwärmung ausgelöst werden kann. Hierbei kann es insbesondere bei Dreiformengedächtnispolymeren mit einer oberen Schalttemperatur T_{sw,2} > 50°C, welche eine Umgebungs- bzw. Materialtemperatur oberhalb der oberen Schalttemperatur T_{sw,2} für die Formänderung TF2 → PF erfordert, zu einer thermischen Schädigung von umgebenden Materialien kommen (beispielsweise menschliches Gewebe im Falle einer medizinischen Anwendung). Wünschenswert wäre daher ein Verfahren, welches es ermöglicht, für Formgedächtnispolymer-Komposite mit Dreiformeneigenschaften eine Wiederherstellung der programmierten temporären Form (TF2) bzw. der permanenten Form (PF) bei moderaten Umgebungstemperaturen (T_{Umg,1} < T_{sw,1}; T_{Umg,2} < T_{sw,2}) bzw. moderaten Magnetfeldstärken zu realisieren.

Der vorliegenden Erfindung liegt daher die Aufgabe zugrunde, ein Verfahren zur Durchführung der Rückstellung eines Dreiformenpolymer-Komposits bereitzustellen, bei dem zumindest eine der zur Wiederherstellung von TF2 oder PF benötigten Umgebungstemperaturen (T_{Umg,1} ,T_{Umg,2}, nachfolgend Schaltumgebungstemperaturen genannt) bzw. Schaltmagnetfeldstärken (H_{sw,1}, H_{sw,2}) beeinflusst werden kann. Idealerweise sollte das Verfahren auch eine Variation der Differenz zwischen den beiden Schaltumgebungstemperaturen erlauben.

Diese Aufgabe wird durch ein Verfahren mit den Merkmalen des Anspruchs 1 gelöst. Das erfindungsgemäße Verfahren bezieht sich auf die Rückstellung eines programmierten Artikels, der wenigstens abschnittsweise ein Formgedächtnis-Kompositmaterial enthält oder vollständig aus diesem besteht. Das Formgedächtnis-Kompositmaterial umfasst
(i) zumindest ein Formgedächtnispolymernetzwerk mit thermisch induzierbaren Dreiformeneigenschaften, das wenigstens ein erstes phasensepariertes Schaltsegment mit einer ersten Übergangstemperatur (T_{trans,1}) und ein zweites phasensepariertes Schaltsegment mit einer zweiten Übergangstemperatur (T_{trans,2}, mit T_{trans,1} < T_{trans,2}) und zumindest eine Sorte kovalenter und/oder nicht-kovalenter Netzpunkte aufweist, sowie
(ii) ein in dem Formgedächtnispolymer eingebettetes magnetisches Material.
Der im Verfahren eingesetzte Artikel wurde zuvor einer thermomechanischen Programmierung unterzogen, so dass er in einer ersten temporären Form (TF1) vorliegt und eine zweite temporäre Form (TF2) und seine permanente Form (PF) in seinem "Formgedächtnis" gespeichert hat.

Erfindungsgemäß ist nun vorgesehen, dass zur Auslösung seiner Rückstellung der Artikel einer äußeren Wärmezufuhr und gleichzeitig einem magnetischen Wechselfeld ausgesetzt wird, wobei zumindest einer der Parameter Magnetfeldstärke (H) und Umgebungstemperatur (T_{Umg}) kontinuierlich oder diskontinuierlich so angehoben wird, dass der Artikel zunächst einen Formenübergang von der ersten temporären Form (TF1) in die (programmierte) zweite temporäre Form (TF2) (bei T_{Umg,1} < T_{sw,1} bzw. T(H_{sw,1}) < T_{sw,1}) und anschließend von dieser in die permanente Form (PF) (bei T_{Umg,2} < T_{sw,2} bzw. T(H_{sw,2}) < T_{sw,2}) vollzieht.

Während im Stand der Technik die Rückstellung von Formgedächtnis-Kompositmaterialien stets entweder durch eine äußere Wärmezufuhr bei T_{Umg,1} > T_{sw,1} ; T_{Umg,2} > T_{sw,2} oder durch Beaufschlagung mit einem magnetischen Wechselfeld mit T(H_{sw,1}) > T_{sw,1} und T(H_{sw,2}) > T_{sw,2} erfolgt, werden erfindungsgemäß beide Heizmöglichkeiten, nämlich die externe Erwärmung durch Anhebung der Umgebungstemperatur und die interne durch Aufheizung des magnetischen Materials im Magnetfeld, in Kombination miteinander eingesetzt. Dabei wird wenigstens einer der Parameter variiert, während der jeweils andere konstant gehalten werden kann. Hierdurch wird erreicht, dass der erste Formenübergang TF1 → TF2 bei einer ersten Schaltumgebungstemperatur T_{Umg,1} erfolgt, die niedriger ist als die untere Schalttemperatur (T_{Umg,1} < T_{sw,1}), bzw. bei einer ersten Schaltmagnetfeldstärke (H_{sw,1}), die geringer ist als eine in Abwesenheit einer externen Wärmezufuhr zur Schaltung erforderliche Magnetfeldstärke (T(H_{sw,1}) < T_{sw,1}). Entsprechendes gilt für den zweiten Formenübergang TF2 → PF (T_{Umg,2} < T_{sw,2} bzw. T(H_{sw,2}) < T_{sw,2}).

Es wurde nämlich festgestellt, dass durch die erfindungsgemäße Kombination der externen mit der internen Wärmezufuhr nicht nur die gezielte Verschiebung der zur Formänderung erforderlichen Schaltumgebungstemperaturen gelingt, sondern auch eine Variation der Differenz zwischen den beiden Schaltumgebungstemperaturen bzw. Schaltmagnetfeldstärken. Das erfindungsgemäße Verfahren kann mit Vorteil somit immer dann eingesetzt werden, wenn eine Formänderung bei Umgebungstemperaturen kleiner als die Schalttemperaturen des Formgedächtnispolymers und/oder eine Variation der Differenz der Umgebungstemperaturen bzw. Schaltmagnetfeldstärken erwünscht ist, beispielsweise weil die bei ausschließlich äußerer Wärmezufuhr erzielbaren Schalttemperaturen so hoch sind, dass sie physiologisch nicht akzeptabel sind. Dabei erfordert das erfindungsgemäße Verfahren keine Veränderung der Polymer- und/oder der Kompositzusammensetzung noch eine Variation des Programmierprozesses zur Fixierung der temporären Formen. Vielmehr kann der einmal hergestellte und programmierte Artikel bedarfsgerecht geschaltet werden, wobei die für die Formänderung benötigten Schaltumgebungstemperaturen - in gewissen materialabhängigen Grenzen - erst während der Anwendung gesteuert werden. Dabei bleiben die exzellenten Triple-Shape-Eigenschaften des Materials erhalten.

Im Rahmen der vorliegenden Erfindung wird unter "äußerer Wärmezufuhr" eine aktive Anhebung der Umgebungstemperatur des rückzustellenden Artikels verstanden, also die Erwärmung des den Artikel umgebenden Mediums, das insbesondere entweder gasförmig (z.B. Luft) sein kann oder ein flüssiger Wärmeträger. Durch die äußere Wärmezufuhr erfolgt eine Erwärmung des Kompositmaterials im Wege des Wärmeaustauschs über seine Oberfläche. Hingegen kommt es im alternierenden Magnetfeld zu einer Erwärmung des eingebetteten magnetischen Materials und einem Wärmeaustausch zwischen dem magnetischen Material und dem Polymermaterial und somit zu einer "internen Wärmezufuhr", wobei das Kompositmaterial wiederum über seine Oberfläche im Wärmaustausch mit dem umgebenden Medium steht.

Wie bereits erwähnt, wird zumindest einer der Parameter Umgebungstemperatur und/oder Magnetfeldstärke während der Rückstellung variiert oder beide. Vorzugsweise ist jedoch vorgesehen, einen der beiden Parameter konstant zu halten und nur den anderen zu verstärken. Auf diese Weise ist eine genauere Steuerung der Formübergänge möglich. Nach einer besonders bevorzugten Ausgestaltung wird die Rückstellung bei einer im Wesentlichen konstanten Magnetfeldstärke (H < H_{sw,1}) unter kontinuierlicher oder diskontinuierlicher Anhebung der Umgebungstemperatur (T_{Umg}) durchgeführt. Dabei kann die Umgebungstemperatur kontinuierlich oder schrittweise beginnend bei einer Temperatur (T_{umg,low}) unterhalb der ersten Schalttemperatur (T_{sw,1}) bis zu einer Temperatur (T_{umg,high}) angehoben werden, die vorzugsweise unterhalb der zweiten Schalttemperatur (T_{sw,2}) liegt. Bei Erreichen der Schaltumgebungstemperaturen (T_{Umg,1}, T_{Umg},₂), deren Höhe insbesondere von der anliegenden Magnetfeldstärke abhängt, kommt es nacheinander zu den beiden Rückstellungen nach TF2 and PF.

Zur erfindungsgemäßen Steuerung der zur Formänderung erforderlichen Schaltumgebungstemperatur (T_{Umg,1} < T_{sw,1} ; T_{Umg,2} < T_{sw,2}) bzw. der Differenz zwischen diesen ist bevorzugt vorgesehen, die Magnetfeldstärke (H) und/oder die Umgebungstemperatur (T_{Umg}) in Abhängigkeit von der gewünschten Schaltumgebungstemperatur (T_{Umg,1}, T_{Umg,2}) vorzubestimmen. Mit anderen Worten werden die Rückstellungsparameter Magnetfeldstärke (H) und/oder die Umgebungstemperatur (T_{Umg}) so vorbestimmt und angewendet, dass sich eine Formänderung bei einer gewünschten Umgebungstemperatur (T_{Umg}) einstellt.

Gemäß einer vorteilhaften Ausgestaltung des erfindungsgemäßen Verfahrens erfolgt die Vorbestimmung der anzuwendenden Magnetfeldstärke (H) und/oder Umgebungstemperatur (T_{Umg}) in Abhängigkeit von einer gewünschten Schaltumgebungstemperatur (T_{Umg,1}, T_{Umg,2}) mindestens einer der beiden Formenübergänge TF1 → TF2 und TF2 → PF rechnerisch unter Anwendung eines mathematischen Zusammenhangs zwischen der Magnetfeldstärke, Umgebungstemperatur und der Schaltumgebungstemperatur (T_{Umg,1}, T_{Umg,2}). Ein solcher rechnerischer Zusammenhang kann beispielsweise empirisch ermittelt werden, indem für ein Formgedächtnis-Kompositmaterial gegebener Chemie und Zusammensetzung eine Versuchsreihe durchgeführt wird, in der das programmierte Material mit unterschiedlichen Magnetfeldstärken und Umgebungstemperaturen beaufschlagt wird und die zur Formänderungen benötigten Schaltumgebungstemperaturen (T_{Umg,1}, T_{Umg,2}) ermittelt werden. Der mathematische Zusammenhang zwischen den Rückstellungsparametern H, T_{Umg} und den Schaltumgebungstemperaturen kann dann etwa mittels eines manuellen oder automatischen Kurvenanpassungsverfahrens ermittelt werden.

Gemäß einer alternativen Ausgestaltung des Verfahrens erfolgt die Vorbestimmung der Magnetfeldstärke (H) und/oder Umgebungstemperatur (T_{Umg}) unter Verwendung eines empirisch ermittelten Kennfeldes, enthaltend Parameterpaare aus Magnetfeldstärke (H), Umgebungstemperatur (T_{Umg}) und Schaltumgebungstemperatur (T_{Umg,1}, T_{Umg,2}). Dabei wird wie vorstehend beschrieben eine Versuchsreihe durchgeführt und die ermittelten, zur Formänderung erforderlichen Schaltumgebungstemperaturen (T_{Umg,1} , T_{Umg,2}) den entsprechenden Parametern zugeordnet und aus dem so ermittelten, insbesondere computerlesbar abgespeicherten Kennfeld die erforderlichen Parameter (H und T_{Umg}) in Abhängigkeit der Schaltumgebungstemperatur (T_{Umg,1}, T_{Umg,2}) ausgelesen. Dabei können nicht definierte Zwischenwerte in bekannter Weise durch mathematische Interpolation ermittelt werden.

Die vorliegenden Experimente deuten darauf hin, dass sich die zur Formänderung erforderlichen Schaltumgebungstemperaturen (T_{Umg,1} , T_{Umg,2}) um bis zu etwa 25 K, mindestens aber um bis zu 10 K, durch die erfindungsgemäße Kombination externer und interner Aufheizung variieren lassen, insbesondere hauptsächlich gegenüber den thermodynamischen Übergangstemperaturen (T_{trans,1} T_{trans,2}) absenken lassen.

Bei dem Formgedächtnispolymer kann es sich um einen Dreiformenkunststoff mit thermisch stimulierbarem Formgedächtniseffekt handeln, wie er im Stand der Technik grundsätzlich bekannt ist. Ein solches Polymer ist in der Lage, temperaturindiziert zumindest zwei Formenübergänge von einer thermomechanisch programmierten ersten temporären Form TF1 in eine thermomechanisch programmierte zweite temporäre Form TF2 und von dieser in die herstellungsbedingte permanente Form PF zu vollziehen. Als wesentliche molekularen Bauteile umfasst der Dreiformenkunststoff wenigstens zwei phasenseparierte Schaltsegmente, die jeweils eine thermodynamische Übergangstemperatur aufweisen, bei der es sich unabhängig voneinander um eine Schmelztemperatur (Tₜᵣₐₙₛ = Tₘ) oder um eine Glasübergangstemperatur (Tₜᵣₐₙₛ = Tg) handeln kann. Damit jedes Segment geeignet ist, jeweils eine temporäre Form zu fixieren, müssen die beiden Übergangstemperaturen der beiden Segmente unterschiedlich sein, wobei ein Abstand zwischen diesen von zumindest 10 K, insbesondere von zumindest 20 K, vorzugsweise von zumindest 30 K, erwünscht ist, um die beiden Übergänge gezielt und unabhängig voneinander schalten zu können.

Unter anderem können die Schaltsegmente ausgewählt sein aus der Gruppe der Polyester, insbesondere Poly(εcaprolacton); der Polyether, der Polyurethane, insbesondere Polyurethan; der Polyetherurethane, der Polyimide, der Polyetherimide, der Polyacrylate, der Polymethacrylate, der Polyvinyle, der Polystyrole, der Polyoxymethyle und der Poly(para-dioxanone). Nach einer weiteren vorteilhaften Ausgestaltung weist das Formgedächtnispolymer hydrolytisch oder enzymatisch spaltbare Gruppen auf, wodurch es bioabbaubar (resorbierbar) ist, was insbesondere für medizinische Anwendungen von Interesse ist. Geeignete spaltbare Gruppen sind beispielsweise Diglycolide, Dilactide, Anhydride und Orthoester. Dabei kann eine Abbaugeschwindigkeit durch den Anteil der spaltbaren Gruppen eingestellt werden.

Als weiteres molekulares Bauteil weisen die Dreiformenpolymere zumindest eine Sorte Netzpunkte (Vernetzungsstellen) auf, mit denen die Schaltsegmente miteinander verknüpft sind und die der Stabilisierung der permanenten Form dienen. Die Netzpunkte können physikalischer (also nicht-kovalenter) Natur sein, beispielsweise durch Dipol-Dipolwechselwirkung oder Van-derVaals-Kräfte ausgebildet werden. Bevorzugt sind im Rahmen der vorliegenden Erfindung jedoch kovalente Netzpunkte, also chemische Bindungen.

Nach einer vorteilhaften Ausgestaltung weist das Formgedächtnispolymer eine physikalisch oder kovalent vernetzte AB-Netzwerkarchitektur auf, bei dem die die Schaltphasen bildenden Schaltsegmente (A, B) mit ihren beiden Kettenenden kovalent im Polymernetzwerk gebunden vorliegen. Beispielsweise kann eines der Schaltsegmente beidseitig an einem aus dem anderen Segment oder unter dessen Beteiligung gebildeten Rückgrat gebunden vorliegen, wobei die Anknüpfungspunkte die Vernetzungspunkte definieren. Denkbar ist ebenfalls, dass zwei oder mehr Schaltsegmente lineare Ketten ausbilden, die wiederum vernetzt sind.

Gemäß einer alternativen Ausgestaltung weist das Formgedächtnispolymer eine physikalisch oder kovalent vernetzte Seitenketten-Netzwerkarchitektur auf, bei dem eines der Schaltsegmente (A, B) in Form freier Seitenketten vorliegt, welche an einem unter Beteiligung des anderen Schaltsegments gebildeten Polymerrückgrat einseitig gebunden sind, während das andere Ende frei ist.

Gemäß einer weiteren alternativen Ausgestaltung weist das Formgedächtnispolymer eine physikalisch vernetzte Netzwerkstruktur auf bei dem die Schaltphasen bildenden Schaltsegmente jeweils kovalent an unterschiedliche Segmente gebunden sind, die jeweils ein physikalisch gebundenes Polymernetzwerk aufbauen, so dass ein System mit drei Phasen entsteht. Ein solches Drei-Phasensystem kann z.B. durch Polymerblends erhalten werden.

Gemäß einer weiteren Ausgestaltung weist das Formgedächtnispolymer eine Kombination von kovalenter und physikalischer Vernetzung auf. Eine mögliche Kombination sind z.B. kovalente Netzpunkte und zwei Phasen mit physikalischer Vernetzung. Ein solches Netzwerk kann dargestellt werden, indem in Gegenwart eines bereits bestehenden, physikalisch vernetzten Polymernetzwerks, das die die erste Schaltphase bildenden Schaltsegmente A enthält, ein Precursor mit den die zweite Schaltphase bildenden Schaltsegmenten B eingebracht und zur Polymerisation gebracht wird. Während seiner Entstehung durchdringt das sich bildende, die Schaltsegmente B enthaltende zweite Netzwerk das bestehende Netzwerk mit den Schaltsegmenten A-jedoch nicht umgekehrt. Ein solches System wird semi-interpenetrierendes Netzwerk (semi-IPN) genannt. Alternativ kann ein solches Netzwerk in Form zweier sich gegenseitig durchdringender Netzwerke (interpenetrierendes Netzwerk, IPN) vorliegen. Ein IPN kann durch gleichzeitige Polymerisation von mindestens zwei Sorten Precursorn dargestellt werden, die jeweils ein eigenes Netzwerk ausbilden, welche sich während der Polymerisation gegenseitig durchdringen. Hierbei weist jedes Schaltsegment eine eigene Charakteristik der kovalenten Verknüpfung auf, die chemisch voneinander unabhängig ist, so dass beide entstehenden Netzwerke sich gegenseitig durchdringen.

Bei den kovalent oder physikalisch vernetzten Netzwerken mit mehreren Schaltphasen ist die Dreiformeneigenschaft unabhängig von der Herstellung der Netzwerke. Die Netzwerke können beispielsweise durch Polymerisation geeigneter Polymere, etwa von Acrylaten und/oder Methacrylaten, dargestellt werden. Ebenfalls ist die Herstellung durch Polyaddition von endgruppenfunktionalisierten Oligomeren möglich, insbesondere durch Polyaddition von hydroxytelechelen Oligomeren mit Isocyanaten zu Copolyesteruerethan-Netzwerken.

Bei dem magnetischen Material kommt es vor allem auf seine Fähigkeit an, in einem magnetischen Wechselfeld so zu wechselwirken, dass es zu seiner Erwärmung kommt. Das magnetische Material ist somit über ein alternierendes Magnetfeld induktiv aufheizbar, so dass eine Erwärmung des Polymermaterials über seine Schalttemperatur erfolgen kann, wodurch die Formrückstellung induziert wird.

Hinsichtlich des magnetischen Materials ist bevorzugt vorgesehen, dass dieses in Form von Partikeln vorliegt, insbesondere in Form von Mikropartikeln oder Nanopartikeln. Dabei sind vorliegend Mikropartikel durch einen mittleren Partikeldurchmesser im Bereich von 1 bis 999 µm definiert und liegen typischerweise im Bereich oberhalb von 500 µm und Nanopartikel durch einen mittleren Partikeldurchmesser im Bereich von 1 bis 999 nm, typischerweise unterhalb von 10 nm. Diese Definition schließt somit eine pulverförmige Konsistenz des magnetischen Materials ein. Aus stofflicher Hinsicht kommen für das magnetische Material alle Materialien in Frage, die geeignet sind, in einem alternierenden magnetischen Feld eine Wechselwirkung zu zeigen, die zur Erwärmung der Partikel führt. Insbesondere kann das magnetische Material elementare Metalle umfassen, beispielsweise Ni, Fe und/oder Co. Geeignet sind darüber hinaus Legierungen, insbesondere Ni-Si, Fe-Pt, Ni-Pd und/oder Co-Pd. Weiterhin können insbesondere pulverförmige Metalloxide als magnetisches Material verwendet werden, insbesondere Ni-Zn-Fe-O, Ba-Co-Fe-O und/oder Fe-O. Daneben können Magnetite oder Eisenoxide zum Einsatz kommen, in denen die Eisenatome zumindest teilweise durch Co, Ni, Mn, Zn, Mg, Cu, Cr, Cd und/oder Ga ersetzt sind. Geeignet sind ebenfalls Ferrite, insbesondere Ni-Zn- und/oder Sr-Ferrite. Ebenso sind Mischungen der vorgenannten Materialien möglich. Bevorzugt werden solche Materialien eingesetzt, die sich in der Polymermatrix homogen verteilen, das heißt mit dieser eine möglichst homogene Mischung ergeben. Insbesondere, wenn dieses Verhalten nicht gegeben ist, kann vorgesehen sein, dass die Partikel des magnetischen Materials eine Beschichtung eines die Mischbarkeit mit dem Formgedächtnispolymer verbessernden Materials aufweisen. Als Beschichtungsmaterial kommen vor allem organische Polymere in Frage.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: schematisch die Programmierung eines streifenförmigen Probenkörpers aus einem Triple-Shape-Kompositmaterial;
- Figuren 2 a, b, c: eine Fotoserie der Rückstellung eines streifenförmigen Probenkörpers aus dem Triple-Shape-Kompositmaterial CLEG30C mit 5 Gew.-% Nanopartikeln bei unterschiedlichen Magnetfeldstärken und konstanter Umgebungstemperatur und
- Figur 3: Rückstellungskurven eines CLEG40C-Probenkörpers mit 5 Gew.-% Nanopartikeln während seiner kontinuierlichen Erwärmung bei unterschiedlichen konstanten Magnetfeldstärken.

Nachfolgend soll das Prinzip der vorliegenden Erfindung am Beispiel eines Probenkörpers (Artikels) aus einem Multiphasen-Polymernetzwerk-Kompositmaterials CLEG-C erläutert werden, das die zwei teilkristallinen Schaltsegmente Polyethylenglycol (PEG) und Poly-ε-caprolacton (PCL) sowie kovalente Netzpunkte enthält.

**Herstellung des Formgedächtnis-Kompositmaterials CLEG(030)C und CLEG(040)C** Die Herstellung von CLEG-C erfolgte unter Verwendung der telechelisch funktionalisierten Makromonomere Poly-ε-caprolacton-dimethacrylat (PCLDMA; Mₙ= 8300 g/mol, Tₘ = 55 °C) und Polyethylenglycolmonomethylethermethacrylat (PEGMEMA; Mₙ= 1000 g/mol, Tₘ = 38 °C). Die beiden Makromonomere wurden in zwei Ansätzen zusammen mit 5 Gew.-% und 10 Gew.-% Nanopartikel (AdNano® MagSilica 50, Fa. Degussa AG Advanced Nanomaterials), bestehend aus 50-60 Gew.-% Eisen(III)oxid in einer SiO₂-Matrix, vermischt und aufgeschmolzen. Die Polymerisation erfolgte bei einer Temperatur von 80 °C für 24 Stunden. Es wurden Ansätze mit PCL-Anteilen im Polymernetzwerk von 30 und 40 Gew.-% bezogen auf das Polymer hergestellt, um die Komposite CLEG(030)C bzw. CLEG(040)C zu erhalten.

Die Kompositmaterialien CLEG(030)C bzw. CLEG(040)C wurden DSC-Messungen unterworfen, wo sie jeweils zwei deutlich voneinander getrennte Schmelzpunkte bei 38 °C (T_{m,PEG}) und bei 50 °C (T_{m,PCL}) zeigten, welche nahezu identisch mit den thermischen Übergängen der reinen multiphasigen Polymernetzwerke CLEG(030) bzw. CLEG(040) (ohne Nanopartikel) sind.

### Programmierung der Formgedächtnis-Kompositmaterialien CLEG(030)C und CLEG(040)C

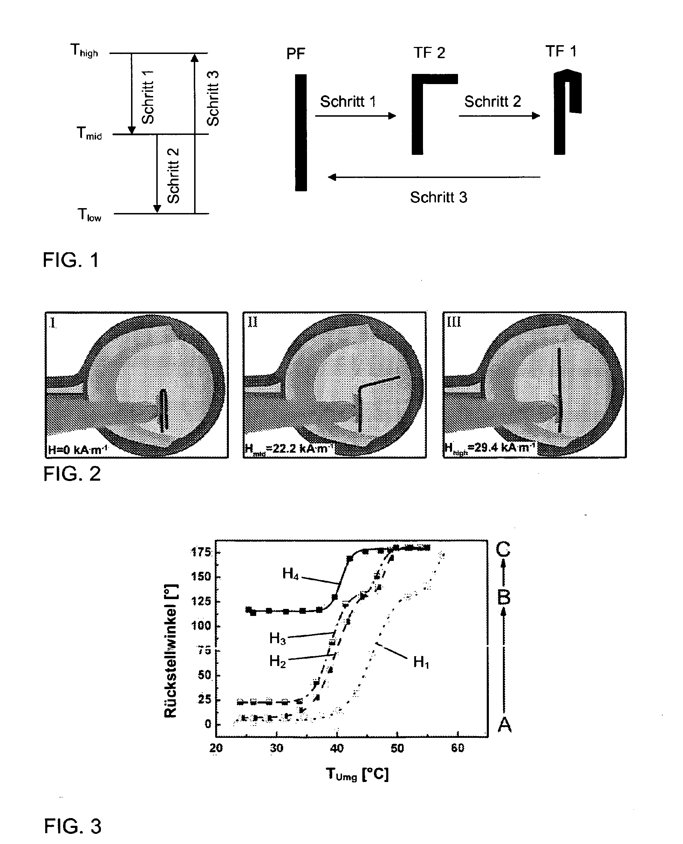

Zur Dreiformenprogrammierung von streifenförmigen Formkörpern aus den Kompositmaterialien CLEG(030)C und CLEG(040)C wurde ein zweistufiges Verfahren angewendet, das in Figur 1 verdeutlicht ist.

Zunächst wurde der in seiner herstellungsbedingten permanenten Form (PF) vorliegende Probenkörper bei einer oberen Umgebungstemperatur (T_{high}) von 70 °C, also oberhalb der Schmelztemperaturen von PCL und PEG, in vollständig amorphem Zustand um einen Winkel von 90° verformt und unter Beibehaltung des Formenzwanges auf eine Zwischentemperatur (T_{mid}) von 40 °C, also unterhalb von T_{m,PCL} aber oberhalb von T_{m,PEG}, abgekühlt, wobei die zweite temporäre Form (TF2) fixiert wurde (Schritt 1 in Figur 1).

Anschließend wurde bei T_{mid} = 40 °C der Probenkörper um weitere 90° auf insgesamt 180° deformiert und die erste temporäre Form (TF1) durch Abkühlen auf eine untere Temperatur (T_{low}) von 0 °C, also unterhalb T_{m,PEG}, fixiert (Schritt 2 in Figur 1).

Nach dieser Prozedur lag der Artikel in einer ersten temporären Form (TF1) vor und hatte die zweite temporäre Form (TF2) sowie seine permanente Form (PF) in seinem "Formengedächtnis" gespeichert.

### Rückstellung

Die nach dem vorstehend beschriebenen Verfahren programmierten Probenkörper wurden in einem eigens zu diesem Zweck entwickelten Inkubator eingebracht. Der Inkubator wies ein über einen Thermostaten temperierbares Gehäuse mit einer Probenhalterung auf, auf welche eine digitale Kamera zur Beobachtung und Videoaufzeichnung der Formveränderung des Probenkörpers gerichtet war. Mit Hilfe eines Pyrometers konnte die Oberflächentemperatur des Körpers mittels Infrarotstrahlung erfasst werden. Ferner war in dem Gehäuse eine mit einem Oszillator verbundene Induktorspule zur Erzeugung eines magnetischen Wechselfeldes angeordnet. Ein Thermoelement erlaubte die Messung der Umgebungstemperatur innerhalb des Gehäuses.

Figur 2 zeigt eine Fotoserie, welche die Rückstellung eines programmierten Probenkörpers aus CLGE(030)C mit 5 Gew.-% Nanopartikeln bei unterschiedlichen Magnetfeldstärken ohne zusätzliche Wärmezufuhr (T_{Umg} = RT = konstant) darstellt. Dabei entsprach eine Magnetfeldstärke von H_{mid} = 22,2 kA/m einer Oberflächentemperatur des Probenkörpers von 40 °C, welche zum Schalten des PEG-Segments erforderlich ist, d.h. zur Auslösung des Formenübergangs von TF1 nach TF2 (Figur 2-II), und eine Magnetfeldstärke von H_{high} = 29,4 kA/m einer Oberflächentemperatur des Probenkörpers von 70 °C, welche zum Schalten des PCL-Segments erforderlich ist, d.h. zur Auslösung des Formenübergangs von TF2 nach PF (Figur 2-III). Eine analoge Messung mit CLGE(040)C ergabt nahezu identische Ergebnisse (H_{mid} = 22,4 kA/m, H_{high} = 29,4 kA/m).

Die Formrückstellung gemäß der vorliegenden Erfindung wurde an gemäß Figur 1 programmierten Probenkörpern aus CLGE(040)C mit 5 Gew.-% Nanopartikeln durchgeführt, indem bei einer konstanten Magnetfeldstärke H die Umgebungstemperatur (Luft) mithilfe des Thermostaten von einer Temperatur unterhalb der Schalttemperatur von PEG auf eine Temperatur oberhalb der Schalttemperatur von PCL linear angehoben wurde, im konkreten Fall von 25 °C auf 57 °C mit einer Aufheizrate von ca. 1 K/min. Der Versuch wurde bei vier Magnetfeldstärken (H₁ = 0 kA/m; H₂ = 18,2 kA/m; H₃ = 20,2 kA/m und H₄ = 24,2 kA/m) durchgeführt. Aus den aufgezeichneten Bildern wurde zur Quantifizierung der Rückstellung der Rückstellwinkel des Probenkörpers in Abhängigkeit von der Oberflächentemperatur ermittelt.

Figur 3 zeigt die so erhaltenen Diagramme (Rückstellwinkel vs. Temperatur), für die vier Magnetfeldstärken. Es ist erkennbar, dass bei der höchsten Magnetfeldstärke von 24,2 kA/m das PEG-Segment ohne äußere Wärmezufuhr spontan schaltet, d.h. dass der Probenkörper bereits bei der Anfangstemperatur von 25 °C in seiner zweiten temporären Form TF2 vorlag. Aus den Wendepunkten der Rückstelldiagramme wurden die zur Formänderung erforderlichen Schaltumgebungstemperaturen (T_{Umg,1} < T_{sw1,PEG} und T_{Umg,2} < T_{sw2,PCL}) bestimmt. Diese sowie ihre Differenz sind in der nachfolgenden Tabelle zusammengestellt. Die Daten belegen, dass eine Verschiebung der den PEG-Segmenten zugehörigen Schaltumgebungstemperatur T_{Umg,1} von 46 °C (bei H₁ = 0 kA/m) auf Temperaturen kleiner als 25 °C (bei H₄ = 24,2 kA/m) erzielt werden konnte. Für die PCL-Schaltphase gelang es, die Schaltumgebungstemperatur T_{Umg,2} von 57 °C (bei H₁ = 0 kA/m) auf 41 °C (bei H₂ = 24,2 kA/m) abzusenken.

**Tabelle**

| Probenkörper % Nanopartikel | H [kA/m] | T_{Umg,1} [°C] | T_{Umg,2} [°C] | Δ(T_{Umg,2}- T_{Umg,1}) [°C] |
|---|---|---|---|---|
| CLEG40 5% | 0 | 46 | 57 | 11 |
| CLEG40 5% | 18,2 | 40 | 48 | 8 |
| CLEG40 5% | 20,2 | 39 | 47 | 8 |
| CLEG40 5% | 24,2 | <25 | 41 | 13 |

## Patentansprüche

1. Verfahren zur Rückstellung eines programmierten Artikels, der wenigstens abschnittsweise ein Formgedächtnis-Kompositmaterial enthält, umfassend
(i) zumindest ein Formgedächtnispolymernetzwerk mit thermisch induzierbaren Dreiformeneigenschaften, das wenigstens ein erstes phasensepariertes Schaltsegment mit einer ersten Übergangstemperatur (T_{trans,1}) und ein zweites phasensepariertes Schaltsegment mit einer zweiten Übergangstemperatur (T_{trans,2}, mit T_{trans,1} < T_{trans,2}) und zumindest eine Sorte kovalenter und/oder nicht-kovalenter Netzpunkte aufweist, sowie
(ii) ein in dem Formgedächtnispolymer eingebettetes magnetisches Material,
wobei der Artikel nach einer thermomechanischen Programmierung in einer ersten temporären Form (TF1) vorliegt und eine zweite temporäre Form (TF2) und eine permanente Form (PF) gespeichert hat,
**dadurch gekennzeichnet, dass**
zur Auslösung der Rückstellung der Artikel einem magnetischen Wechselfeld und gleichzeitig einer äußeren Wärmezufuhr ausgesetzt wird, wobei zumindest einer der Parameter Magnetfeldstärke (H) und Umgebungstemperatur (T_{Umg}) kontinuierlich oder diskontinuierlich so angehoben wird, sodass der Artikel zunächst einen Formen-übergang von der ersten temporären Form (TF1) in die zweite temporäre Form (TF2) und anschließend von dieser in die permanente Form (PF) vollzieht.

2. Verfahren nach Anspruch 1, wobei die Magnetfeldstärke (H) und/oder die Umgebungstemperatur (T_{Umg}) in Abhängigkeit von einer gewünschten zur Formänderung erforderlichen Schaltumgebungstemperatur (T_{Umg,1}, T_{Umg,2}) des ersten und/oder des zweiten Schaltsegments vorbestimmt wird/werden.

3. Verfahren nach Anspruch 2, wobei die Vorbestimmung der Magnetfeldstärke (H) und/oder der Umgebungstemperatur (T_{Umg}) unter Verwendung eines empirisch ermittelten Kennfeldes erfolgt.

4. Verfahren nach Anspruch 2, wobei die Vorbestimmung der Magnetfeldstärke (H) und/oder der Umgebungstemperatur (T_{Umg}) rechnerisch unter Anwendung eines mathematischen Zusammenhangs erfolgt.

5. Verfahren nach einem der vorhergehenden Ansprüche, wobei die Rückstellung bei einer im Wesentlichen konstanten Magnetfeldstärke (H) unter kontinuierlicher oder diskontinuierlicher Anhebung der Umgebungstemperatur (T_{Umg}) erfolgt.

6. Verfahren nach Anspruch 5, wobei bei im Wesentlichen konstanter Magnetfeldstärke (H) die Umgebungstemperatur (T_{Umg}) kontinuierlich oder schrittweise beginnend bei einer Temperatur (T_{Umg,low}) unterhalb einer unteren Schalttemperatur (T_{Sw,1}) bis zu einer Temperatur (T_{Umg,high}) angehoben wird, wobei die Temperatur (T_{Umg,high}) insbesondere unterhalb einer oberen Schalttemperatur (T_{sw,2}) liegt.

7. Verfahren nach einem der vorhergehenden Ansprüche, wobei die Schaltsegmente ausgewählt sind aus der Gruppe der Polyester, insbesondere Poly(ε-caprolacton); der Polyether, der Polyurethane, insbesondere Polyurethan, der Polyetherurethane, der Polyimide, der Polyetherimide, der Polyacrylate, der Polymethacrylate, der Polyvinyle, der Polystyrole, der Polyoxymethyle und der Poly(para-dioxanone).

8. Verfahren nach einem der vorhergehenden Ansprüche, wobei die Schaltsegmente hydrolytisch und/oder enzymatisch spaltbare Gruppen aufweisen, die insbesondere ausgewählt sind aus der Gruppe der Diglycolide, Dilactide, Anhydride und Orthoester.

9. Verfahren nach einem der vorhergehenden Ansprüche, wobei das magnetische Material in Form von Partikeln vorliegt, insbesondere in Form von Mikropartikeln mit einem mittleren Partikeldurchmesser im Bereich von 1 bis 999 µm oder in Form von Nanopartikeln mit einem mittleren Partikeldurchmesser im Bereich von 1 bis 999 nm.

10. Verfahren nach einem der vorhergehenden Ansprüche, wobei
**dadurch gekennzeichnet, dass**
das magnetische Material zumindest eine Komponente ist, ausgewählt aus der Gruppe umfassend Metalle, insbesondere Ni, Fe und Co; Legierungen, insbesondere Ni-Si, Fe-Pt, Ni-Pd und Co-Pd; Metalloxide, insbesondere Ni-Zn-Fe-O, Ba-Co-Fe-O und Fe-O; Magnetite oder Eisenoxide, in denen die Eisenatome teilweise durch Co, Ni, Mn, Zn, Mg, Cu, Cr, Cd und/oder Ga ersetzt sind; Ferrite, insbesondere Ni-Zn- und Sr-Ferrite.

## Claims

1. A method for restoring a programmed article which contains, at least over portions, a shape memory composite material, said composite material comprising
(i) at least one shape memory polymer network with thermally inducible triple shape properties which comprises at least a first phase-separated switching segment with a first transition temperature (T_{trans,1}) and a second phase-separated switching segment with a second transition temperature (T_{trans, 2}, where T_{trans, 1} < T_{trans, 2}) and at least one type of covalent and/or non-covalent netpoints, and
ii) a magnetic material embedded in the shape memory
polymer,
wherein, after a thermo-mechanical programming process, the article is present in a first temporary shape (TF1) and having stored a second temporary shape (TF2) and a permanent shape (PF), **characterised in that** in order to trigger the restoration, the article is subjected to a magnetic alternating field and simultaneously to an external heat supply, wherein at least one of the parameters of magnetic field strength (H) and ambient temperature (T_{Umg}) is increased continuously or discontinuously in such a way that the article first experiences a transition in shape from the first temporary shape (TF1) into the second temporary shape (TF2) and subsequently from this into the permanent shape (PF).

2. The method according to claim 1, wherein the magnetic field strength (H) and/or the ambient temperature (T_{Umg}) is/are predetermined as a function of a desired switching ambient temperature (T_{Umg, 1}, T_{Umg, 2}), which is necessary for the change of shape, of the first and/or second switching segment.

3. The method according to claim 2, wherein the magnetic field strength (H) and/or the ambient temperature (T_{Umg}) is/are predetermined using an empirically ascertained characteristic map.

4. The method according to claim 2, wherein the magnetic field strength (H) and/or ambient temperature (T_{Umg}) is/are predetermined mathematically using a mathematical interrelation.

5. The method according to any one of the preceding claims, wherein the restoration process is carried out at a substantially constant magnetic field strength (H) with a continuous or discontinuous increase in the ambient temperature (T_{Umg}).

6. The method according to claim 5, wherein at a substantially constant magnetic field strength (H) the ambient temperature (T_{Umg}) is increased, either continuously or in steps, starting from a temperature (T_{Umg, low}) below a lower switching temperature (T_{SW, 1}) up to a temperature (T_{Umg, high}), the temperature (T_{Umg, high}) in particular lying below an upper switching temperature (T_{SW, 2}).

7. The method according to any one of the preceding claims, wherein the switching segments are selected from the group of polyesters, in particular poly(ε-caprolactone); polyethers, polyurethanes, in particular polyurethane; polyether urethanes, polyimides, polyetherimides, polyacrylates, polymethacrylates, polyvinyls, polystyrenes, polyoxymethyls and poly(para-dioxanones).

8. The method according to any one of the preceding claims, wherein the switching segments comprise groups which can be cleaved hydrolytically and/or enzymatically and which are selected in particular from the group of diglycolides, dilactides, anhydrides and orthoesters.

9. The method according to any one of the preceding claims, wherein the magnetic material is present in the form of particles, in particular in the form of microparticles with a mean particle diameter in the range of 1 to 999 µm, or in the form of nanoparticles with a mean particle diameter in the range of 1 to 999 nm.

10. The method according to any one of the preceding claims, **characterised in that** the magnetic material is at least one component selected from the group comprising metals, in particular Ni, Fe and Co; alloys, in particular Ni-Si, Fe-Pt, Ni-Pd and Co-Pd; metal oxides, in particular Ni-Zn-Fe-O, Ba-Co-Fe-O and Fe-O; magnetites or iron oxides in which the iron atoms are replaced in part by Co, Ni, Mn, Zn, Mg, Cu, Cr, Cd and/or Ga; ferrites, in particular Ni-Zn ferrites and Sr ferrites.

## Revendications

1. Procédé pour réinitialiser un article programmé, qui contient au moins par endroits un matériau composite à mémoire de forme, comportant :
(i) au moins un réseau polymère à mémoire de forme présentant des propriétés liées à trois formes pouvant être induites thermiquement, lequel réseau polymère à mémoire de forme présente au moins un premier segment de commutation à phases séparées présentant une première température de transition (T_{trans,1}) et un deuxième segment de commutation à phases séparées présentant une deuxième température de transition (T_{trans,2}, où T_{trans,1} < T_{trans,2}), et au moins une variété de points de réticulation covalents et/ou non covalents,
(ii) ainsi qu'un matériau magnétique incorporé dans le polymère à mémoire de forme, l'article se présentant après une programmation thermomécanique sous une première forme temporaire (TF1) et ayant mémorisé une deuxième forme temporaire (TF2) et une forme permanente (PF),
**caractérisé en ce que**
pour déclencher la réinitialisation, l'article est exposé à un champ alternatif magnétique et de manière simultanée à un apport externe de chaleur, étant entendu qu'au moins un des paramètres, que sont l'intensité du champ magnétique (H) et la température ambiante (T_{Umg}), est augmenté en continu ou en discontinu, de sorte que l'article accomplit un changement de forme en passant de la première forme temporaire (TF1) à la deuxième forme temporaire (TF2) puis en passant de cette dernière à la forme permanente (PF).

2. Procédé selon la revendication 1, dans lequel l'intensité du champ magnétique (H) et/ou la température ambiante (T_{Umg}) sont préalablement déterminées en fonction d'une température ambiante de commutation (T_{Umg,1} ; T_{Umg,2}) du premier et/ou du deuxième segment de commutation souhaitée, nécessaire au changement de forme.

3. Procédé selon la revendication 2, dans lequel la détermination préalable de l'intensité du champ magnétique (H) et/ou de la température ambiante (T_{Umg}) se fait en utilisant un réseau de caractéristiques déterminé de manière empirique.

4. Procédé selon la revendication 2, dans lequel la détermination préalable de l'intensité du champ magnétique (H) et/ou de la température ambiante (T_{Umg}) se fait grâce à une simulation par calcul en utilisant une relation mathématique.

5. Procédé selon l'une quelconque des revendications précédentes, dans lequel la réinitialisation s'effectue, dans le cas d'une intensité de champ magnétique (H) essentiellement constante, en augmentant de manière continue ou de manière discontinue la température ambiante (T_{Umg}).

6. Procédé selon la revendication 5, dans lequel, dans le cas d'une intensité de champ magnétique (H) essentiellement constante, la température ambiante (T_{Umg}) est augmentée de manière continue ou de manière progressive, à partir d'une température (T_{Umg,low}) inférieure à une température de commutation basse (T_{SW,1}), jusqu'à atteindre une certaine température (T_{Umg,high}), sachant que la température (T_{Umg,high}) se situe en particulier en-dessous d'une température de commutation haute (T_{SW,2}).

7. Procédé selon l'une quelconque des revendications précédentes, dans lequel les segments de commutation sont choisis dans le groupe des polyesters, en particulier des poly(ε-caprolactones) ; des polyéthers, des polyuréthanes, en particulier du polyuréthane, des polyéther-uréthanes, des polyimides, des polyétherimides, des polyacrylates, des polyméthacrylates, des polyvinyles, des polystyrènes, des polyoxyméthyles et des poly(para-dioxanones).

8. Procédé selon l'une quelconque des revendications précédentes, dans lequel les segments de commutation présentent des groupes séparables par voie hydrolytique et/ou enzymatique, lesquels sont choisis en particulier dans le groupe des diglycolides, des dilactides, des anhydrides et des orthoesters.

9. Procédé selon l'une quelconque des revendications précédentes, dans lequel le matériau magnétique se présente sous la forme de particules, en particulier sous la forme de microparticules présentant un diamètre moyen de particule situé dans la plage allant de 1 à 999 µm, ou sous la forme de nanoparticules présentant un diamètre moyen de particule situé dans la plage allant de 1 à 999 nm.

10. Procédé selon l'une quelconque des revendications précédentes,
**caractérisé en ce que**
le matériau magnétique est au moins un composant choisi dans le groupe comportant des métaux, en particulier du Ni, du Fe et du Co ; des alliages, en particulier de Ni-Si, de Fe-Pt, de Ni-Pd et de Co-Pd ; des oxydes métalliques, en particulier Ni-Zn-Fe-O, Ba-Co-Fe-O et Fe-O ; des magnétites et des oxydes de fer, dans lesquels les atomes de fer sont partiellement remplacés par du Co, du Ni, du Mn, du Zn, du Mg, du Cu, du Cr, du Cd et/ou du Ga ; des ferrites, en particulier des ferrites Ni-Zn et des ferrites Sr.
